# EUROPEAN PATENT SPECIFICATION

(11) **EP 4 087 072 B1**
(45) Date of publication and mention of the grant of the patent: **09.10.2024**
(21) Application number: 20909913.4
(22) Date of filing: 14.08.2020
(51) Int. Cl.: B60L 3/00, H02B 13/02

(54) **HIGH-VOLTAGE DEVICE BOX**
HOCHSPANNUNGSVORRICHTUNGSGEHÄUSE
CAISSON DE DISPOSITIFS HAUTE TENSION

(30) Priority: 02.01.2020 CN 202010003175
(43) Date of publication of application: 09.11.2022
(73) Proprietor: CRRC Zhuzhou Locomotive Co., Ltd., Zhuzhou, Hunan 412001 (CN)
(72) Inventor: LI, Tao, Zhuzhou, Hunan 412001 (CN); JIANG, Congjian, Zhuzhou, Hunan 412001 (CN); LUO, Chuanwen, Zhuzhou, Hunan 412001 (CN); HENG, Fang, Zhuzhou, Hunan 412001 (CN); WANG, Xiongbo, Zhuzhou, Hunan 412001 (CN); PENG, Xin, Zhuzhou, Hunan 412001 (CN)
(74) Representative: Ran, Handong
(86) International application number: PCT/CN2020/109199
(87) International publication number: WO 2021/135260

(56) References cited:
- CN-A- 102 868 113
- CN-A- 103 594 953
- CN-A- 107 425 439
- CN-A- 109 524 896
- CN-A- 111 162 463
- CN-U- 206 575 073
- CN-U- 208 674 732
- CN-U- 209 374 961
- US-A1- 2014 211 378

## Description

### Field of the Invention

The present invention belongs to a device for electric locomotives and EMUs, and specifically relates to a high-voltage device box.

### Background of the Invention

Main high-voltage devices in a high-voltage device box for electric locomotives and EMUs include a vacuum circuit breaker, a high-voltage grounding switch, a high-voltage isolation switch, a voltage transformer and a lightning arrester, among which the high-voltage isolation switch is provided with low-voltage components (pneumatic components and DC110V low-voltage circuit components), and the vacuum circuit breaker also includes low-voltage control parts (a driving mechanism, pneumatic components and DC110V low-voltage circuit components). CN 209 374 961 U, CN 103 594 953 A and CN 206 575 073 U disclose high-voltage device boxes for electric locomotives according to the prior art.

At present, the above-mentioned devices are all installed in the high-voltage device box for electric locomotives and EMUs. The arrangement of the devices is based on the principle of facilitating the entry and exit of high-voltage cables, but does not fully consider the inspection and repair requirements of high-voltage switch products with a high fault rate. Therefore, when the high-voltage switch products have faults in the actuating mechanism, low-voltage lines or pneumatic components, the sealed top cover of the high-voltage device box has to be opened first, and the devices are removed from the box before inspection and repair, which is inconvenient for the inspection and repair. In addition, all kinds of high-voltage devices in the existing high-voltage device box are installed on the side wall of the box body, and their insulating performance is ensured by a bottom insulating partition plate. In this installation structure, the volume of the box body is determined by the space occupied by independent high-voltage devices on the side wall. As a result, part of the space of the existing high-voltage device box is idle, and the overall volume and weight of the box body are relatively large, which is not conducive to the load-bearing of the roof installation structure.

### Summary of the Invention

The technical problem to be solved by the present invention is to overcome the above defects and provide a high-voltage device box in which devices can be reasonably arranged to facilitate the inspection and repair of the device and reduce the volume of the box body.

The technical solution adopted in the present invention is: a high-voltage device box, including a box body, and a high-voltage grounding switch, a voltage transformer, a lightning arrester, a high-voltage isolation switch and a vacuum circuit breaker located in the box body; the inside of the box body is divided into a low-voltage region and a high-voltage region by means of a partition plate, and a low-voltage portion of the high-voltage isolation switch and a low-voltage portion of the vacuum circuit breaker are both installed in the low-voltage region; the high-voltage grounding switch and a high-voltage portion of the vacuum circuit breaker are both installed on the side of the partition plate facing the high-voltage region, a high-voltage portion of the high-voltage isolation switch is installed on a bottom surface of the high-voltage region by means of a supporting insulator, and the voltage transformer and the lightning arrester are respectively installed on two opposite side walls of the high-voltage region; an inspection and repair cover plate is provided above the low-voltage region, and a main top cover is provided above the high-voltage region.

In the above solution, when a device such as a high-voltage switch fails, only the inspection and repair cover plate in the low-voltage region needs to be opened for inspection and repair, which improves the safety and convenience of the inspection and repair. In addition, this high-voltage device box is designed based on the principle of partition of high- and low-voltage regions and modular installation of functions, that is, each high-voltage device is first functionally divided, for example: the high-voltage isolation switch is divided to insulating modules (high-voltage portion), driving mechanism modules (low-voltage portion), etc., and then each functional module is reasonably installed in the high-voltage device box according to the space utilization of the box body. Therefore, when the devices in the high-voltage device box are installed, the space at the bottom of the box body is also used in addition to the space on the side wall of the box body, that is, the redundant space of the box body is effectively used, which can reduce the volume of the high-voltage device box.

Preferably, the supporting insulator includes an upper insulator and a lower insulator, a bottom insulating partition plate and a middle insulating partition plate are provided in sequence from bottom to top at the bottom of the high-voltage region, and the high-voltage grounding switch is located above the bottom insulating partition plate and is not in contact with the middle insulating partition plate; the upper insulator is located on an upper surface of the middle insulating partition plate, the lower insulator is located on a lower surface of the middle insulating partition plate, and the upper insulator, the middle insulating partition plate and the lower insulator are fixedly connected; and a top insulating partition plate is provided at the top of the high-voltage region.

Due to the reduction in the volume of the high-voltage device box, in order to ensure the insulating performance, the middle insulating partition plate is provided between the devices in the high-voltage region and the bottom of the box body, and the top insulating partition plate is provided between the devices in the high-voltage region and the top of the box body. Considering the insulating performance of the supporting insulator, the supporting insulator is divided into an upper insulator and a lower insulator to avoid perforation on the insulating partition plates. However, because the lower insulator plays a supporting role and its height is limited, the distance between the middle insulating partition plate and the bottom surface of the box body will be greater than the shortest distance between the rotating high-voltage grounding switch and the bottom surface of the box body, which will cause the high-voltage grounding switch to interfere with the middle insulating partition plate during rotation. Therefore, in order to ensure the insulating performance, the middle insulating partition plate is not provided below the high-voltage grounding switch, but the bottom insulating partition plate is provided alone there.

Preferably, the bottom insulating partition plate and the middle insulating partition plate are respectively fixed on the bottom surface of the box body through a first insulating column and a second insulating column, and the top insulating partition plate is fixed on the main top cover of the box body through a third insulating column.

In the above solution, the insulating partition plates are all connected to the box body through insulating columns, which can further ensure its insulating performance.

Preferably, the upper insulator includes an upper insulator upper flange and an upper insulator lower flange, and the lower insulator includes a lower insulator upper flange and a lower insulator lower flange; the upper insulator lower flange, the middle insulating partition plate, and the lower insulator upper flange are connected together by fasteners; and the lower insulator lower flange is fixedly connected to the bottom surface of the box body.

The connection ends of the insulators are set as flange structures, which facilitates the connection between the insulators and other devices.

Preferably, each of the upper insulator lower flange and the lower insulator upper flange is provided with an installation groove, a sealing ring is installed in the installation groove, and the inner ring of the sealing ring is located outside the fastener.

In the above arrangement, after the sealing ring is installed in the installation groove, the fastener can be insulated from the high-voltage device above the middle insulating partition plate to ensure the insulating performance in the box body.

Preferably, a voltage equalizing ring is installed at the upper part of the upper insulator, so as to reduce the electric field intensity at the electric field concentration.

The beneficial effects of the present invention are as follows: the high- and low-voltage regions are partitioned in the box body of the high-voltage device box of the present invention, which is beneficial to the inspection and repair of low-voltage components with high fault rates and improves the inspection and repair safety; after the high- and low-voltage regions are partitioned in the box body of the high-voltage device box, high-voltage devices are divided into high- and low-voltage portions, and a combination of side wall installation and bottom surface installation is used, which can reduce the height space size of the high-voltage device box by at least 1/3 and also reduce the weight of the box by 1/3; multiple layers of solid insulating partition plates are arranged in the box body, and the insulating partition plates are supported by insulating columns, which ensures the insulating performance between the high-voltage devices and the bottom and top surfaces of the box body; and the supporting insulator composed of an upper insulator and a lower insulator to ensure vertical insulation, and plane sealing is used between the upper insulator and the insulating partition plates to ensure the insulating performance.

### Brief Description of the Drawings

FIG. 1 is a front view of a high-voltage device box of the present invention;
FIG. 2 is a right view of the high-voltage device box of the present invention;
FIG. 3 is a bottom view of the high-voltage device box of the present invention;
FIG. 4 is a sectional view of A-A direction in FIG. 3;
FIG. 5 is a sectional view of B-B direction in FIG. 3;
FIG. 6 is a front view of a box body in the high-voltage device box of the present invention;
FIG. 7 is a left view of the box body in the high-voltage device box of the present invention;
FIG. 8 is a sectional view of C-C direction in FIG. 6;
FIG. 9 is a sectional view of D-D direction in FIG. 6;
FIG. 10 is a sectional view of E-E direction in FIG. 6;
FIG. 11 is a schematic diagram of a rotation path of a high-voltage grounding switch in the high-voltage device box of the present invention;
FIG. 12 is a front view of a lower insulator in the high-voltage device box of the present invention;
FIG. 13 is a top view of the lower insulator in the high-voltage device box of the present invention;
FIG. 14 is a bottom view of the lower insulator in the high-voltage device box of the present invention;
FIG. 15 is a front view of an upper insulator in the high-voltage device box of the present invention; and
FIG. 16 is an assembly view of a supporting insulator in the high-voltage device box of the present invention.

### Detailed Description of the Embodiments

The present invention will be further described below with reference to the embodiments and accompanying drawings.

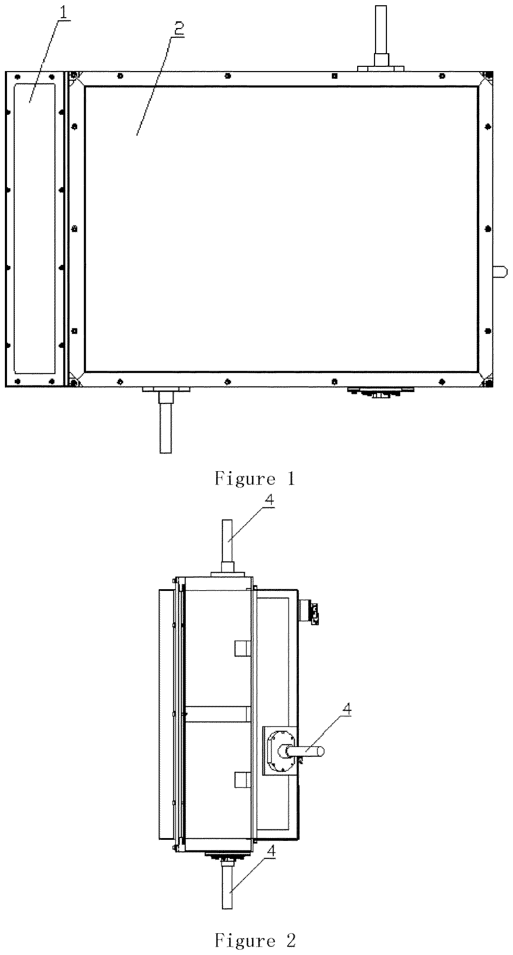

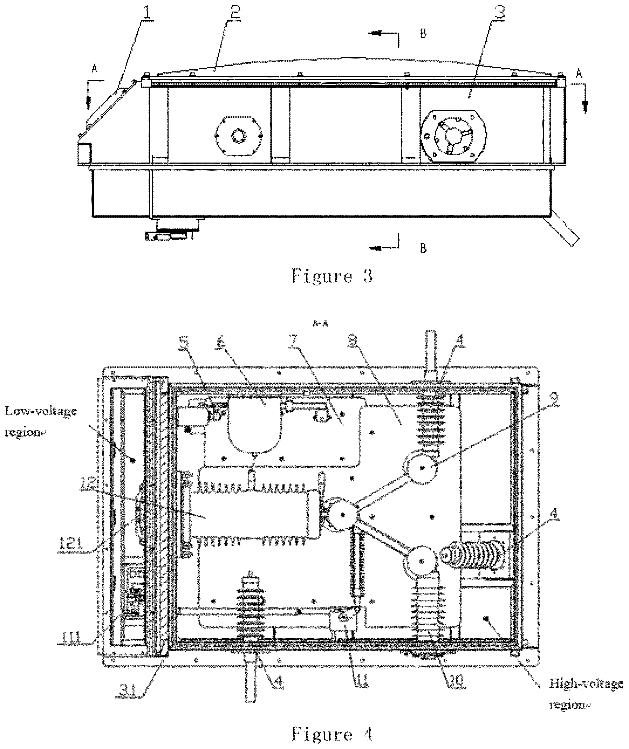

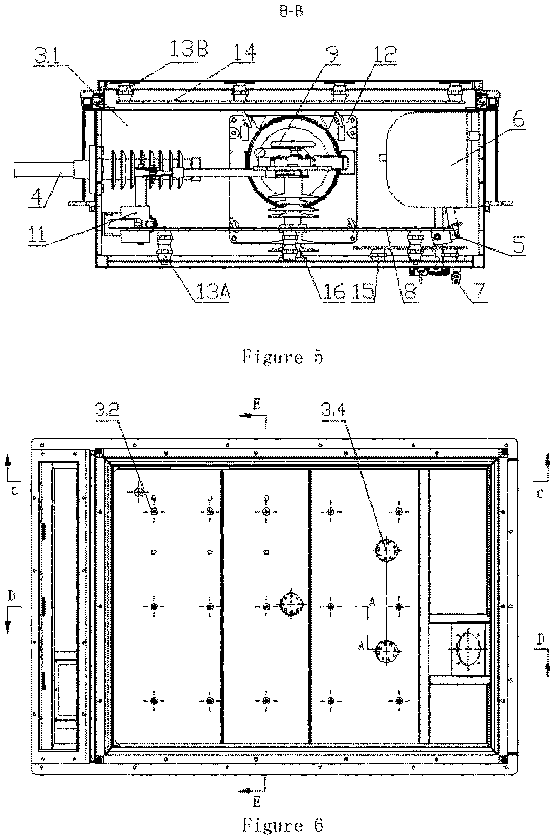

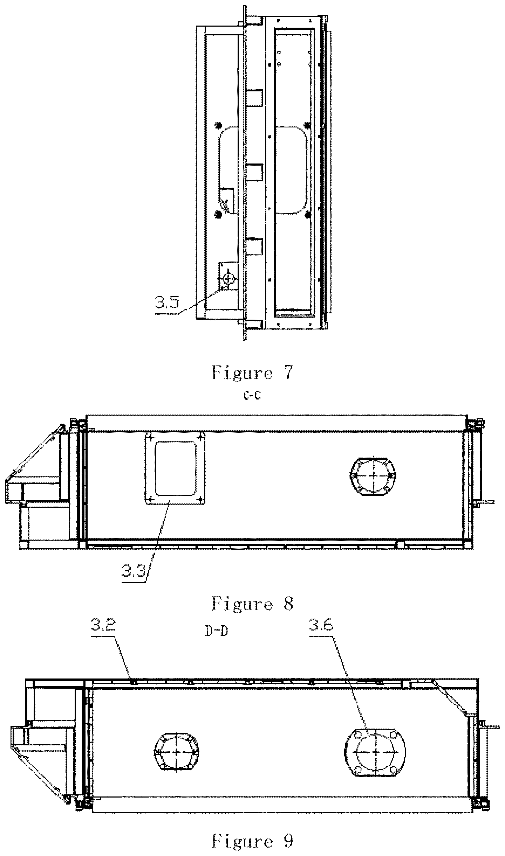

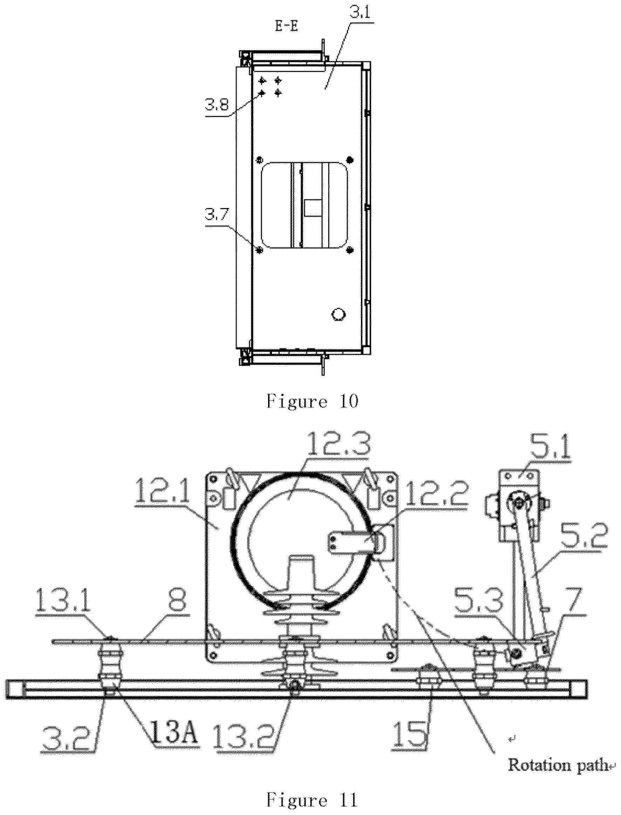

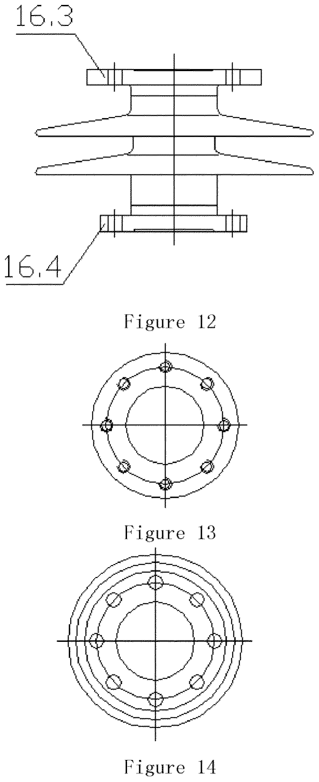

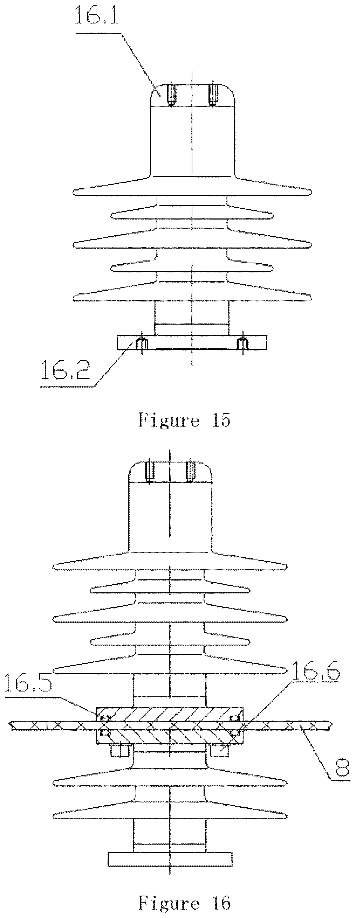

As shown in FIGS. 1 to 16, a high-voltage device box includes a box body 3. The box body 3 is a mechanical installation body that contains devices in the box body, and is formed by welding aluminum alloy profiles. The box body 3 is provided with high-voltage cables 4 for introducing external high voltage. The inside of the box body 3 is divided into a high-voltage region and a low-voltage region by means of an aluminum alloy partition plate 3.1. There are two top covers at the upper part of the box body, including an inspection and repair cover plate 1 for the inspection and repair of the low-voltage region, and a main top cover 2 for the installation of high-voltage devices. The inspection and repair cover plate 1 and the main top cover 2 are installed on the box body by fasteners. During inspection and repair, only the inspection and repair cover plate 1 is removed, and the main top cover 2 is in a sealed state for a long time.

The specific structure in the box body 3 includes: a high-voltage grounding switch 5, a voltage transformer 6, a bottom insulating partition plate 7, a middle insulating partition plate 8, a voltage equalizing ring 9, a lightning arrester 10, a high-voltage isolation switch 11, a vacuum circuit breaker 12, an insulating column 13A, an insulating column 13B, a top insulating partition plate 14, an insulating column 15, and a supporting insulator 16. Among the above components, the high-voltage grounding switch 5, the voltage transformer 6, the lightning arrester 10, a high-voltage portion of the high-voltage isolation switch 11 and a high-voltage portion of the vacuum circuit breaker 12 are all high-voltage devices in the box, and are installed in the high-voltage region of the box body 3. A low-voltage portion 111 of the high-voltage isolation switch 11 and a low-voltage portion 121 of the vacuum circuit breaker 12 are installed in the low-voltage region of the box body 3.

The bottom insulating partition plate 7 and the middle insulating partition plate 8 isolate the air between the high-voltage devices in the high-voltage region and a bottom surface of the box body 3, thereby increasing the electrical clearance and enhancing the insulating performance between the devices in the box. Meanwhile, the top insulating partition plate 14 isolates the air path between the high-voltage devices and a top surface of the box body 3, thereby increasing the electrical clearance and enhancing the insulating performance between the components in the box.

The voltage equalizing ring 9 is installed above the supporting insulator 16 to equalize the electric field of conductive components above the supporting insulator, so as to improve the insulating performance. The supporting insulator 16 functions as a supporting insulator for the conductive connection components between various high-voltage devices. The insulating columns 13A and 13B have the same structure, the insulating column 15 and the insulating column 13A or 13B are only different in height, and the insulating columns function as supporting insulators for the insulating partition plates. The bottom insulating partition plate 7, the middle insulating partition plate 8 and the top insulating partition plate 14 all have through holes for installing fasteners 13.1, the insulating columns 13A, 13B and 15 all have threaded holes for installing fasteners, and the fasteners 13.1 (such as screws) fixedly connect the insulating partition plates and the insulating columns together.

In the present invention, the specific structure of the box body 3 includes: a partition plate 3.1, an insulating column installation seat 3.2 for the insulating column 13A, the insulating column 13B and the insulating column 15, a voltage transformer installation seat 3.3, a supporting insulator installation seat 3.4, a valve cylinder mechanism installation seat 3.5 for the high-voltage isolation switch, a lightning arrester installation seat 3.6, a vacuum circuit breaker installation seat 3.7 and a high-voltage grounding switch installation seat 3.8.

The partition plate 3.1 functions to divide the box body 3 into a high-voltage region and a low-voltage region, the valve cylinder mechanism installation seat 3.5 functions to install pneumatic components of the high-voltage isolation switch and a low-voltage control circuit assembly that is a valve cylinder mechanism, and the vacuum circuit breaker installation seat 3.7 functions to install the low-voltage component 121 of the vacuum circuit breaker 12; the high-voltage grounding switch 5 is installed on the partition plate 3.1 through the high-voltage grounding switch installation seat 3.8, the supporting insulator 16 is installed on the bottom surface of the box body 3 through the supporting insulator installation seat 3.4, the voltage transformer 6 and the lightning arrester 10 are respectively installed on two opposite side walls of the box body 3 through the voltage transformer installation seat 3.3 and the lightning arrester installation seat 3.6, and the insulating column 13A, the insulating column 13B, and the insulating column 15 are installed on the insulating column installation seat 3.2, where the insulating column installation seat 3.2 on the box body has threaded holes; the insulating column 13A, the insulating column 13B, and the insulating column 15 also have threaded holes for installing fasteners, and the bolts 13.2 connect the insulating columns and the box body together.

In the present invention, the high-voltage grounding switch 5 includes an installation plate 5.1, a rotating rod 5.2 and a contact 5.3, and the high-voltage portion of the vacuum circuit breaker includes an installation base plate 12.1, a vacuum circuit breaker blade 12.2 and a vacuum circuit breaker insulator 12.3; the high-voltage grounding switch 5 is fixed on the partition plate 3.1 through the installation plate 5.1. Due to the space limitation in the box, the rotating rod 5.2 and the contact 5.3 of the high-voltage grounding switch will interfere with the middle insulating partition plate 8 when rotating to the vacuum circuit breaker blade 12.2. Therefore, the middle insulating partition plate 8 is not provided below the high-voltage grounding switch 5, but the bottom insulating partition plate 7 is added in order to ensure the insulating performance.

In this embodiment, the insulating performance of the high-voltage device box is achieved by the above-mentioned insulating partition plates, and each high-voltage device is installed in the high-voltage device box by means of the high- and low-voltage regions, thereby greatly reducing the space size of the high-voltage device box. In this embodiment, when the same high-voltage devices are used, the solution of this embodiment can reduce the height space size of the high-voltage device box by at least 1/3, and also reduce the weight of the box by 1/3.

In this embodiment, in order to further enhance the insulating performance, the supporting insulator 16 is divided into an upper insulator and a lower insulator; the upper insulator includes an upper insulator upper flange 16.1 and an upper insulator lower flange 16.2; and the lower insulator includes a lower insulator upper flange 16.3 and a lower insulator lower flange 16.4. The upper insulator upper flange 16.1 is used to install the conductive connection components of the high-voltage devices, the upper insulator lower flange 16.2 is on the upper surface of the middle insulating partition plate 8, the lower insulator upper flange 16.3 is on the lower surface of the middle insulating partition plate 8, and the upper insulator lower flange 16.2, the middle insulating partition plate 8 and the lower insulator upper flange 16.3 are connected together by fasteners 16.6; and the lower insulator lower flange 16.4 is fixedly connected to the supporting insulator installation seat 3.4 on the bottom surface of the box body.

The upper insulator lower flange 16.2 is provided with threaded holes, the lower insulator upper flange 16.3 is provided with through holes, and the fasteners 16.6 may be bolts with heads facing down.

Further, each of the upper insulator lower flange 16.2 and the lower insulator upper flange 16.3 is provided with an installation groove, a sealing ring 16.5 is installed in the installation groove, and the inner ring of the sealing ring 16.5 is located outside the fastener 16.6 to insulate the fastener 16.6 from the high-voltage conductive connection component above the middle insulating partition plate 8, so as to ensure the insulating performance in the limited space.

## Claims

1. A high-voltage device box, comprising a box body (3), and a high-voltage grounding switch (5), a voltage transformer (6), a lightning arrester (10), a high-voltage isolation switch (11) and a vacuum circuit breaker (12) located in the box body (3), wherein the inside of the box body (3) is divided into a low-voltage region and a high-voltage region by means of a partition plate (3.1), and a low-voltage portion (111) of the high-voltage isolation switch and a low-voltage portion (121) of the vacuum circuit breaker are both installed in the low-voltage region; the high-voltage grounding switch (5) and a high-voltage portion of the vacuum circuit breaker (12) are both installed on the side of the partition plate (3.1) facing the high-voltage region, a high-voltage portion of the high-voltage isolation switch (11) is installed on a bottom surface of the high-voltage region by means of a supporting insulator (16), and the voltage transformer (6) and the lightning arrester (10) are respectively installed on two opposite side walls of the high-voltage region; an inspection and repair cover plate (1) is provided above the low-voltage region, and a main top cover (2) is provided above the high-voltage region.

2. The high-voltage device box according to claim 1, wherein the supporting insulator (16) comprises an upper insulator and a lower insulator, a bottom insulating partition plate (7) and a middle insulating partition plate (8) are provided in sequence from bottom to top at the bottom of the high-voltage region, and the high-voltage grounding switch (5) is located above the bottom insulating partition plate (7) and is not in contact with the middle insulating partition plate (8); the upper insulator is located on an upper surface of the middle insulating partition plate (8), the lower insulator is located on a lower surface of the middle insulating partition plate (8), and the upper insulator, the middle insulating partition plate (8) and the lower insulator are fixedly connected; and a top insulating partition plate (14) is provided at the top of the high-voltage region.

3. The high-voltage device box according to claim 2, wherein the bottom insulating partition plate (7) and the middle insulating partition plate (8) are respectively fixed on the bottom surface of the box body (3) through a first insulating column (15) and a second insulating column (13A), and the top insulating partition plate (14) is fixed on the main top cover (2) of the box body through a third insulating column (13B).

4. The high-voltage device box according to claim 2, wherein the upper insulator comprises an upper insulator upper flange (16.1) and an upper insulator lower flange (16.2), and the lower insulator comprises a lower insulator upper flange (16.3) and a lower insulator lower flange (16.4); the upper insulator lower flange (16.2), the middle insulating partition plate (8), and the lower insulator upper flange (16.3) are connected together by fasteners (16.6); and the lower insulator lower flange (16.4) is fixedly connected to the bottom surface of the box body (3).

5. The high-voltage device box according to claim 4, wherein each of the upper insulator lower flange (16.2) and the lower insulator upper flange (16.3) is provided with an installation groove, a sealing ring (16.5) is installed in the installation groove, and the inner ring of the sealing ring (16.5) is located outside the fastener (16.6).

6. The high-voltage device box according to any one of claims 2 to 5, wherein a voltage equalizing ring (9) is installed at the upper part of the upper insulator.

## Patentansprüche

1. Kasten für eine Hochspannungsvorrichtung, der einen Kastenhauptteil (3) und einen Hochspannungserdungsschalter (5), einen Spannungswandler (6), einen Überspannungsableiter (10), einen Hochspannungstrennschalter (11) und einen Vakuumleistungsschalter (12) in dem Kastenhauptteil (3) umfasst, wobei die Innenseite des Kastenhauptteils (3) mithilfe einer Trennplatte (3.1) in einen Niederspannungsbereich und einen Hochspannungsbereich unterteilt ist und ein Niederspannungsabschnitt (111) des Hochspannungstrennschalters und ein Niederspannungsabschnitt (121) des Vakuumleistungsschalters beide im Niederspannungsbereich installiert sind, wobei der Hochspannungserdungsschalter (5) und ein Hochspannungsabschnitt des Vakuumleistungsschalters (12) beide auf der dem Hochspannungsbereich zugewandten Seite der Trennplatte (3.1) installiert sind, ein Hochspannungsabschnitt des Hochspannungstrennschalters (11) mithilfe eines Stützisolators (16) an einer Bodenfläche des Hochspannungsbereichs installiert ist und der Spannungswandler (6) und der Überspannungsableiter (10) jeweils an zwei gegenüberliegenden Seitenwänden des Hochspannungsbereichs installiert sind, über dem Niederspannungsbereich eine Inspektions- und Reparaturabdeckplatte (1) und über dem Hochspannungsbereich eine obere Hauptabdeckung (2) vorgesehen ist.

2. Kasten für eine Hochspannungsvorrichtung nach Anspruch 1, wobei der Stützisolator (16) einen oberen und einen unteren Isolator umfasst, unten im Hochspannungsbereich in Reihenfolge von unten nach oben eine untere isolierende Trennplatte (7) und eine mittlere isolierende Trennplatte (8) vorgesehen ist und der Hochspannungserdungsschalter (5) über der unteren isolierenden Trennplatte (7) liegt und sich nicht in Kontakt mit der mittleren isolierenden Trennplatte (8) befindet, der obere Isolator an einer oberen Fläche der mittleren isolierenden Trennplatte (8) liegt, der untere Isolator an einer unteren Fläche der mittleren isolierenden Trennplatte (8) liegt und der obere Isolator, die mittlere isolierende Trennplatte (8) und der untere Isolator fest verbunden sind und oben im Hochspannungsbereich eine obere isolierende Trennplatte (14) vorgesehen ist.

3. Kasten für eine Hochspannungsvorrichtung nach Anspruch 2, wobei die untere isolierende Trennplatte (7) und die mittlere isolierende Trennplatte (8) über eine erste isolierende Säule (15) beziehungsweise eine zweite isolierende Säule (13A) an der Bodenfläche des Kastenhauptteils (3) befestigt sind und die obere isolierende Trennplatte (14) über eine dritte isolierende Säule (13B) an der oberen Hauptabdeckung (2) des Kastenhauptteils befestigt ist.

4. Kasten für eine Hochspannungsvorrichtung nach Anspruch 2, wobei der obere Isolator einen oberen Flansch (16.1) des oberen Isolators und einen unteren Flansch (16.2) des oberen Isolators und der untere Isolator einen oberen Flansch (16.3) des unteren Isolators und einen unteren Flansch (16.4) des unteren Isolators umfasst, wobei der untere Flansch (16.2) des oberen Isolators, die mittlere isolierende Trennplatte (8) und der obere Flansch (16.3) des unteren Isolators über Befestigungselemente (16.6) miteinander verbunden sind und der untere Flansch (16.4) des unteren Isolators fest mit der Bodenfläche des Kastenhauptteils (3) verbunden ist.

5. Kasten für eine Hochspannungsvorrichtung nach Anspruch 4, wobei der untere Flansch (16.2) des oberen Isolators und der obere Flansch (16.3) des unteren Isolators jeweils mit einer Installationsnut versehen ist, ein Dichtungsring (16.5) in der Installationsnut installiert ist und der Innenring des Dichtungsrings (16.5) außerhalb des Befestigungselements (16.6) liegt.

6. Kasten für eine Hochspannungsvorrichtung nach einem der Ansprüche 2 bis 5, wobei am oberen Teil des oberen Isolators ein Spannungsausgleichsring (9) installiert ist.

## Revendications

1. Caisson de dispositif à haute tension, comprenant un corps de caisson (3) ainsi qu'un interrupteur de mise à la terre à haute tension (5), un transformateur de tension (6), un parafoudre (10), un interrupteur d'isolement à haute tension (11) et un disjoncteur à vide (12) situés dans le corps de caisson (3), l'intérieur du corps de caisson (3) étant divisé en une région à basse tension et en une région à haute tension au moyen d'une plaque de séparation (3.1), et une partie à basse tension (111) de l'interrupteur d'isolement à haute tension et une partie à basse tension (121) du disjoncteur à vide étant toutes deux installées dans la région à basse tension ; l'interrupteur de mise à la terre à haute tension (5) et une partie à haute tension du disjoncteur à vide (12) étant tous deux installés sur le côté de la plaque de séparation (3.1) faisant face à la région à haute tension, une partie à haute tension de l'interrupteur d'isolement à haute tension (11) étant installée sur une surface inférieure de la région à haute tension au moyen d'un isolateur de support (16), et le transformateur de tension (6) et le parafoudre (10) étant respectivement installés sur deux parois latérales opposées de la région à haute tension ; une plaque de recouvrement d'inspection et de réparation (1) étant située au-dessus de la région à basse tension, et un couvercle supérieur principal (2) étant situé au-dessus de la région à haute tension.

2. Caisson de dispositif à haute tension selon la revendication 1, l'isolateur de support (16) comprenant un isolateur supérieur et un isolateur inférieur, une plaque de séparation isolante inférieure (7) et une plaque de séparation isolante centrale (8) étant situées, successivement de bas en haut, en bas de la région à haute tension, et l'interrupteur de mise à la terre à haute tension (5) étant situé au-dessus de la plaque de séparation isolante inférieure (7) et n'étant pas en contact avec la plaque de séparation isolante centrale (8) ; l'isolateur supérieur étant situé sur une surface supérieure de la plaque de séparation isolante centrale (8), l'isolateur inférieur étant situé sur une surface inférieure de la plaque de séparation isolante centrale (8), et l'isolateur supérieur, la plaque de séparation isolante centrale (8) et l'isolateur inférieur étant reliés de manière fixe ; et une plaque de séparation isolante supérieure (14) étant située en haut de la région à haute tension.

3. Caisson de dispositif à haute tension selon la revendication 2, la plaque de séparation isolante inférieure (7) et la plaque de séparation isolante centrale (8) étant respectivement fixées sur la surface inférieure du corps de caisson (3) par l'intermédiaire d'une première colonne isolante (15) et d'une deuxième colonne isolante (13A), et la plaque de séparation isolante supérieure (14) étant fixée sur le couvercle supérieur principal (2) du corps de caisson par l'intermédiaire d'une troisième colonne isolante (13B).

4. Caisson de dispositif à haute tension selon la revendication 2, l'isolateur supérieur comprenant un rebord supérieur d'isolateur supérieur (16.1) et un rebord inférieur d'isolateur supérieur (16.2), et l'isolateur inférieur comprenant un rebord supérieur d'isolateur inférieur (16.3) et un rebord inférieur d'isolateur inférieur (16.4) ; le rebord inférieur d'isolateur supérieur (16.2), la plaque de séparation isolante centrale (8) et le rebord supérieur d'isolateur inférieur (16.3) étant reliés entre eux par des éléments de fixation (16.6) ; et le rebord inférieur d'isolateur inférieur (16.4) étant relié de manière fixe à la surface inférieure du corps de caisson (3).

5. Caisson de dispositif à haute tension selon la revendication 4, le rebord inférieur d'isolateur supérieur (16.2) et le rebord supérieur d'isolateur inférieur (16.3) étant chacun munis d'une rainure d'installation, une bague d'étanchéité (16.5) étant installée dans la rainure d'installation, et la bague intérieure de la bague d'étanchéité (16.5) étant située à l'extérieur de l'élément de fixation (16.6).

6. Caisson de dispositif à haute tension selon l'une quelconque des revendications 2 à 5, un anneau d'égalisation de tension (9) étant installé au niveau de la partie supérieure de l'isolateur supérieur.
